Europäisches Patentamt

European Patent Office

Office européen des brevets

(19)

(11) **EP 1 481 785 A1**

(12) **EUROPÄISCHE PATENTANMELDUNG**

(43) Veröffentlichungstag:
**01.12.2004 Patentblatt 2004/49**

(51) Int Cl.⁷: **B29C 47/50**, B29C 47/08

(21) Anmeldenummer: **03011995.2**

(22) Anmeldetag: **28.05.2003**

| | |
|---|---|
| (84) Benannte Vertragsstaaten:<br>**AT BE BG CH CY CZ DE DK EE ES FI FR GB GR HU IE IT LI LU MC NL PT RO SE SI SK TR**<br>Benannte Erstreckungsstaaten:<br>**AL LT LV MK**<br><br>(71) Anmelder: **Coperion Werner & Pfleiderer GmbH & Co. KG**<br>**70469 Stuttgart (DE)** | (72) Erfinder:<br>• **Munz, Rainer**<br>  **71540 Murrhardt (DE)**<br>• **Strecker, Jürgen**<br>  **70825 Korntal (DE)**<br><br>(74) Vertreter: **Rau, Manfred, Dr. Dipl.-Ing. et al**<br>**Rau, Schneck & Hübner**<br>**Patentanwälte**<br>**Königstrasse 2**<br>**90402 Nürnberg (DE)** |

(54) **Anlage zum Aufbereiten von Stoffen**

(57) Eine Anlage zum Aufbereiten von Stoffen weist zwei Schneckenmaschinen (1, 2) auf, die mittels eines Verbindungsteils (29) miteinander verbunden sind. Das Verbindungsteil (29) ist aus einer Verbindungsstellung in eine die Gehäuse-Bohrungen (12) freigebende Öffnungs-Stellung bewegbar. Weiterhin ist eine an dem Verbindungsteil (29) angreifende BewegungsEinrichtung (38) zur Durchführung der Bewegung vorgesehen.

Fig. 1

EP 1 481 785 A1

**Beschreibung**

Die Erfindung betrifft eine Anlage zum Aufbereiten von Stoffen nach dem Oberbegriff des Anspruches 1.

Insbesondere bei der Aufbereitung von Kunststoffen ist es oft sinnvoll, zwei oder mehrere hintereinander angeordnete Extruder vorzusehen, die jeweils nur einzelne Verfahrensschritte der Aufbereitung durchführen. Beispielsweise kann beim Einsatz von Kunststoff in Pulverform das Einziehen des Pulvers und das Aufschmelzen in einem ersten Extruder erfolgen. Die Homogenisierung und der Druckaufbau erfolgen dann in einem zweiten nachgeordneten Extruder. Derartige Hintereinander-Anordnungen von mehreren Extrudern sind beispielsweise aus der EP 1 005 411 B1, der US 3,261,056 und der DE 2 304 088 A bekannt. Bei den aus dem Schrifttum und der Praxis bekannten Anlagen der gattungsgemäßen Art sind die oft viele Tonnen schweren Verbindungsteile nur schwer zu entfernen und wieder einzusetzen, wobei das Entfernen der Verbindungsteile notwendig ist, um die Schnecken-Wellen des ersten Extruders ziehen zu können. Das Ziehen der Schnecken-Welle durch den Bereich der Austrags-Zone ist deshalb in der Praxis üblich, weil am anderen Ende der Motor mit Kupplung und Getriebe vorgesehen ist und ein Ziehen der Schnecken-Welle im zuletzt genannten Bereich praktisch nicht möglich ist. Unter Stoffen werden grundsätzlich solche verstanden, die fließfähig sind, also auf Schneckenmaschinen behandelt werden können.

Der Erfindung liegt daher die Aufgabe zugrunde, eine Anlage der gattungsgemäßen Art so weiterzubilden, dass die Schnecken-Welle beziehungsweise Wellen der ersten Schneckenmaschine auf besonders einfache und zeitsparende Weise gezogen werden können.

Diese Aufgabe wird erfindungsgemäß durch die Merkmale im Kennzeichnungsteil des Anspruches 1 gelöst. Der Kern der Erfindung liegt darin, dass das Verbindungsteil zu einer eigenständigen Funktionsgruppe weitergebildet worden ist, die mittels einer Bewegungs-Einrichtung aus ihrer die beiden Schneckenmaschinen verbindenden Verbindungs-Stellung in eine Öffnungs-Stellung verbracht werden kann, in der die mindestens eine Schnecken-Bohrung der ersten Schneckenmaschine freiliegt, so dass die Schnecken-Welle beziehungsweise die Schnecken-Wellen des ersten Extruders in der praxisüblichen Weise aus dem Bereich der Austrags-Zone gezogen werden können.

Die Ansprüche 2 und 3 geben vorteilhafte Einzelheiten zur Bewegungs-Einrichtung wieder.

Die Ansprüche 4 bis 6 geben eine erste vorteilhafte Ausgestaltung der Führung des Verbindungsteils wieder.

Die Ansprüche 7 bis 11 geben eine weitere vorteilhafte Ausgestaltung der Bewegbarkeit des Verbindungsteils relativ zu einer Schneckenmaschine wieder.

Weitere Merkmale, Vorteile und Einzelheiten der Erfindung ergeben sich aus der nachfolgenden Beschreibung mehrerer Ausführungsbeispiele anhand der Zeichnung. Es zeigt

Fig. 1 einen vertikalen Schnitt durch ein erstes Ausführungsbeispiel einer Anlage nach der Erfindung mit in Verbindungs-Stellung befindlichem Verbindungsteil,

Fig. 2 eine Draufsicht auf die Anlage nach dem ersten Ausführungsbeispiel in teilweise aufgebrochener Darstellung,

Fig. 3 eine Einzelheit III aus Fig. 1,

Fig. 4 einen horizontalen Teilschnitt entsprechend der Schnittlinie IV-IV in Fig. 1,

Fig. 5 einen vertikalen Schnitt durch das erste Ausführungsbeispiel der Anlage nach der Erfindung mit dem in Öffnungs-Stellung befindlichem Verbindungsteil,

Fig. 6 einen vertikalen Schnitt durch ein zweites Ausfiihrungsbeispiel einer Anlage nach der Erfindung mit in Verbindungs-Stellung befindlichem Verbindungsteil,

Fig. 7 eine Teildarstellung eines dritten Ausführungsbeispiels mit einer abgewandelten Bewegungs-Einrichtung,

Fig. 8 einen vertikalen Schnitt durch ein viertes Ausfiihrungsbeispiel einer Anlage nach der Erfindung mit in Verbindungs-Stellung befindlichem Verbindungsteil, das einen zusätzlichen Funktions-Abschnitt aufweist,

Fig. 9 einen vertikalen Schnitt durch ein fünftes Ausführungsbeispiel einer Anlage nach der Erfindung mit in Verbindungs-Stellung befindlichem Verbindungsteil,

Fig. 10 eine Draufsicht auf die Anlage nach dem fünften Ausführungsbeispiel in teilweise aufgebrochener Darstellung, mit in Verbindungs-Stellung verbindlichem Verbindungsteil,

Fig. 11 eine Teil-Draufsicht auf die Anlage nach dem fünften Ausführungsbeispiel mit in Öffnungs-Stellung befindlichem Verbindungsteil,

Fig. 12 einen durch den zweiten Extruder gelegten vertikalen Schnitt des fünften Ausführungsbeispiels mit in Verbindungs-Stellung befindlichem Verbindungsteil,

Fig. 13   eine Darstellung gemäß Fig. 12 mit in Öffnungs-Stellung befindlichem Verbindungsteil und

Fig. 14   eine Einzelheit XIV aus Fig. 13.

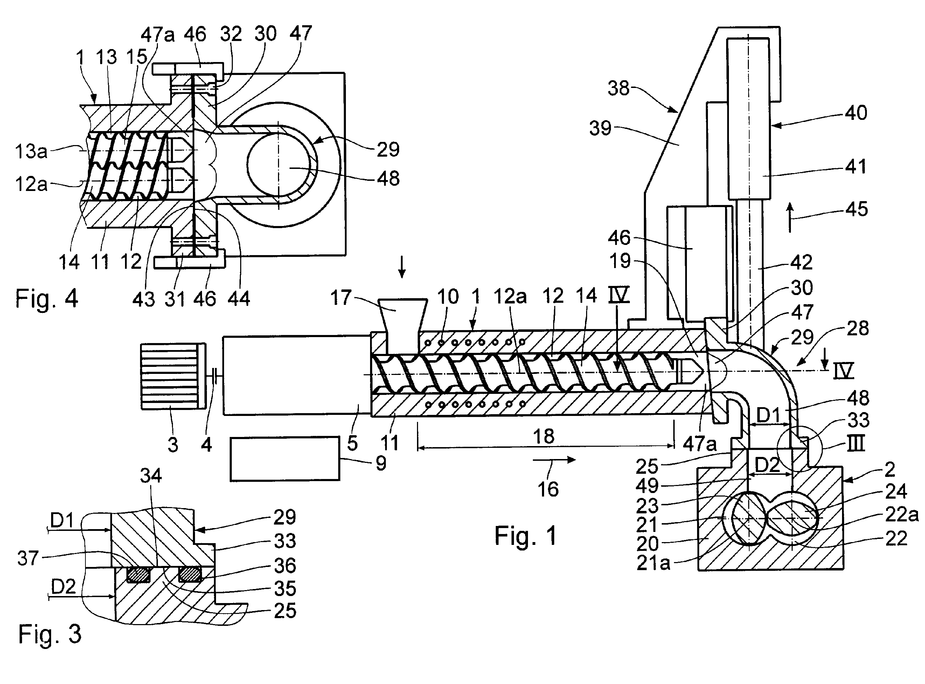

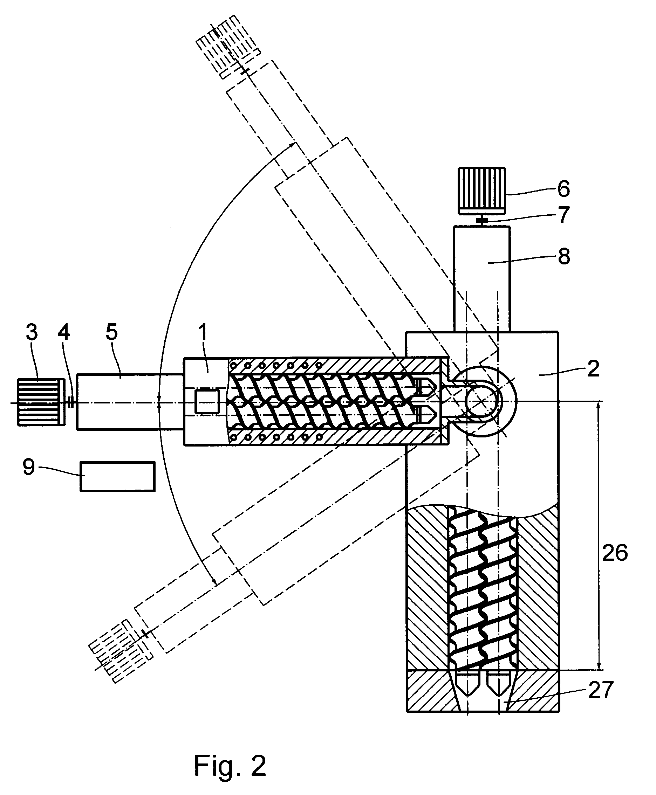

Das in Fig. 1 bis 5 dargestellte erste Ausführungsbeispiel weist einen ersten Extruder 1 und einen zweiten Extruder 2 auf. Der erste Extruder 1 ist oberhalb des zweiten Extruders 2 angeordnet. Der erste Extruder 1 wird mittels eines ersten Motors 3 über eine erste Kupplung 4 und ein erstes Getriebe 5 angetrieben. Der zweite Extruder 2 wird mittels eines zweiten Motors 6 über eine zweite Kupplung 7 und ein zweites Getriebe 8 angetrieben. Die Steuerung der Motoren 3 und 6 erfolgt über eine Steuereinheit 9.

Der erste Extruder 1 weist ein mit einer Heizung 10 versehenes Gehäuse 11 auf, in dem zwei erste Gehäuse-Bohrungen 12, 13 mit zueinander parallelen Achsen 12a, 13a ausgebildet sind, die parallel zueinander verlaufen und etwa 8-förmig ineinander greifen. In diesen Gehäuse-Bohrungen 12, 13 sind zwei erste Schnecken-Wellen 14, 15 angeordnet, die an das erste Getriebe 5 angekuppelt sind. Die Schnecken-Wellen 14, 15 werden gleichoder gegensinnig angetrieben. Der erste Extruder 1 weist einen in einer Förderrichtung 16 hinter dem ersten Getriebe 5 angeordneten Zuführtrichter 17 auf, an den sich eine oder mehrere Behandlungs-Zonen 18 anschließen.

Am Ende des ersten Extruders 1 ist eine Austrags-Zone 19 vorgesehen, aus der der Austrag in Richtung der Achsen 12a, 13a erfolgt. Anstelle von zwei Gehäuse-Bohrungen und entsprechend zwei Schnecken-Wellen können auch nur eine Bohrung oder drei und mehr Bohrungen und eine entsprechende Zahl von Schnecken-Wellen vorhanden sein.

Der zweite Extruder 2 weist ebenfalls ein Gehäuse 20 mit einer Heizung auf, in dem zwei zweite Gehäuse-Bohrungen 21, 22 mit zueinander parallelen Achsen 21 a, 22a und einander durchdringend ausgebildet sind, die also ebenfalls einen 8-förmigen Querschnitt begrenzen. In den zweiten Gehäuse-Bohrungen 21, 22 sind zwei mit dem zweiten Getriebe 8 gekuppelte zweite Schnecken-Wellen 23, 24 angeordnet, die ebenfalls gleich- oder gegensinnig drehantreibbar sind. Der zweite Extruder 2 weist anschließend an das zweite Getriebe 8 einen Zuführ-Stutzen 25 auf. An den Zuführ-Stutzen 25 schließen sich in Förderrichtung 16 eine oder mehrere Behandlungs-Zonen 26 an. Am Ende des zweiten Extruders 2 ist wiederum eine Austrags-Zone 27 vorgesehen.

Auch für den zweiten Extruder 2 gilt, dass nur eine oder mehr als zwei Bohrungen und eine entsprechende Zahl von Schnecken-Wellen vorhanden sein können. Auch beim zweiten Extruder 2 kann der Antrieb der Schnecken-Wellen gleich- oder gegenläufig erfolgen.

Zwischen dem ersten Extruder 1 und dem zweiten Extruder 2 ist eine Übergabe-Zone 28 ausgebildet, die ein Verbindungsteil 29 aufweist, das nach Art eines Rohrkrümmers ausgebildet ist. Dieses Verbindungsteil 29 weist auf der dem ersten Extruder 1 zugewandten Seite einen Anschluss-Flansch 30 auf, der am zugewandten Gehäuse-Flansch 31 des ersten Gehäuses mittels Schrauben 32 befestigt wird. Das Verbindungsteil 29 weist auf der dem zweiten Extruder 2 zugewandten Seite ebenfalls einen AnlageFlansch 33 auf, dessen Anlage-Fläche 34 gegen eine zugewandte Anlage-Fläche 35 des Zufuhr-Stutzens 25 anliegt. In der Anlage-Fläche 35 sind Ausnehmungen 36 ausgebildet, in denen Dichtungs-Packungen 37 angeordnet sind, die in entlastetem Zustand über die Anlage-Fläche 35 nach oben vorstehen. Das Verbindungsteil 29 ist mit dem Zuführ-Stutzen 25 nicht verschraubt. Eine dichte Anlage der Anlage-Flächen 34 und 35 aneinander ergibt sich durch die thermische Ausdehnung während des Betriebes.

Auf dem Gehäuse 11 des ersten Extruders 1 ist eine Bewegungs-Einrichtung 38 für das Verbindungsteil 29 angeordnet. Diese weist eine tragarmartige Halte-Einrichtung 39 auf, die am Gehäuse 11 angebracht ist. Diese trägt wiederum einen Bewegungs-Antrieb 40 für das Verbindungsteil 29. Dieser Bewegungs-Antrieb 40 kann als mit Druckmittel beaufschlagbarer Kolben-Zylinder-Antrieb ausgebildet sein, dessen Zylinder 41 an der Halte-Einrichtung 39 angebracht ist, während seine Kolbenstange 42 mit dem Verbindungsteil 29 verbunden ist. Bei dem ersten Ausführungsbeispiel nach Fig. 1 bis 5 wird das Verbindungsteil 29 senkrecht nach oben, also quer zur Richtung der Achsen 12a, 13a beziehungsweise 21 a, 22a des ersten Extruders 1 und des zweiten Extruders 2 angehoben. Das Anheben erfolgt also auch quer zu den Anlage-Flächen 34, 35 zwischen dem Verbindungsteil 29 und dem Zufuhr-Stützen 25. Um das Abheben des Anschluss-Flansches 30 vom Gehäuse-Flansch 31 möglichst einfach zu gestalten, sind die Anlage-Flächen 43, 44 der beiden Flansche 30, 31 gegenüber der vertikalen, also gegenüber der Abhebe-Richtung 45 geneigt angeordnet, so dass sie unmittelbar nach Beginn des Abhebens voneinander freikommen beziehungsweise beim Ansetzen entgegen der Abhebe-Richtung 45 erst im letzten Augenblick wieder zur Anlage aneinander kommen. Um die lineare Führung des Verbindungsteil 29 in Abhebe-Richtung 45 und in entgegengesetzter Richtung sicherzustellen, können mit der Halte-Einrichtung 39 oder dem Gehäuse-Flansch 31 Führungs-Schienen 46 verbunden sein, die den Anschluss-Flansch 31 umgreifen und zumindestens in dem Bereich führen, in dem das Verbindungsteil 29 wenigstens teilweise in Überdeckung mit dem Gehäuse-Flansch 31 ist.

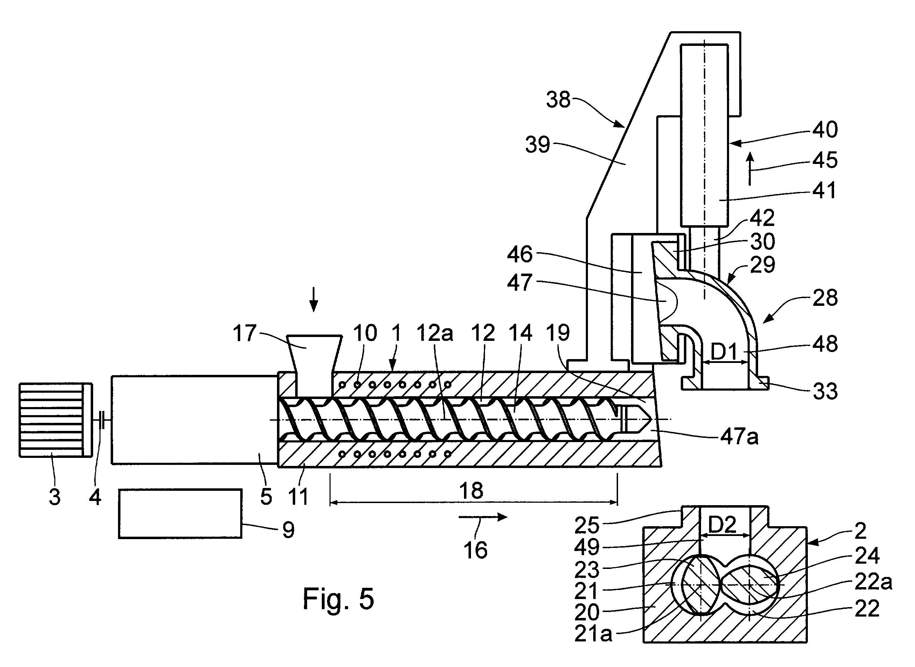

Wie aus Fig. 5 hervorgeht, erfolgt die Abhebe-Bewegung des Verbindungsteils 29 soweit, dass auf jeden Fall die ersten Gehäuse-Bohrungen 12, 13 im Bereich der Austrags-Zone 19 frei sind, so dass die ersten Schnecken-Wellen 14, 15 in Richtung ihrer Achsen 12a, 13a frei aus dem ersten Gehäuse 11 herausgezogen werden können.

Die in der Austrags-Zone 19 des ersten Extruders, dem Verbindungsteil 29 und dem Zuführ-Stutzen 25 ausgebildeten Überström-Kanäle 47a, 47, 48, 49 weisen an den jeweiligen Übergangsstellen keine in den Strömungsweg vorstehenden Ecken oder Kanten auf. Der Querschnitt des Überström-Kanals 47a am Ende des ersten zweiwelligen Extruders 1 ist 8-förmig. Die Querschnittsfläche des Überström-Kanals 47a am Ende des Extruders 1 ist gleich oder kleiner als die Querschnittsfläche des Überström-Kanals 47 im Verbindungsteil 29. Der Übergang von diesem 8-förmigen Querschnitt des Überström-Kanals 47 auf den Kreisquerschnitt des Überström-Kanals 48 im Verbindungsteil 29 mit einem Durchmesser D, ist in das Verbindungsteil 29 integriert. Darüber hinaus gilt, dass der Durchmesser D2 des Überström-Kanals 49 im Zuführ-Stutzen 25 gleich oder größer ist als D1. Es gilt also D1 ≤ D2. Entsprechendes gilt auch für Querschnitte von Extrudern mit mehr als zwei Schnecken-Wellen.

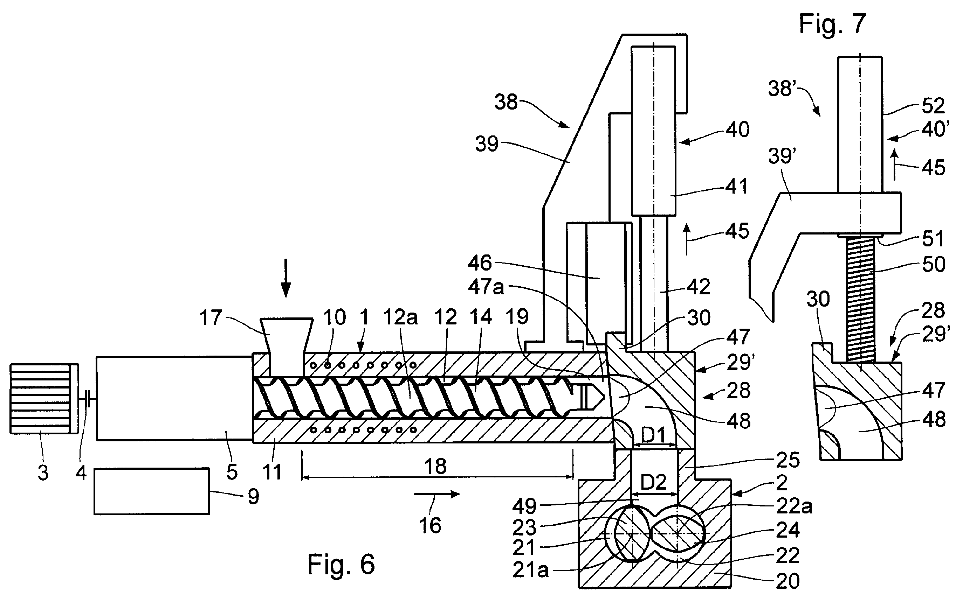

Das nur leicht abgewandelte zweite Ausführungsbeispiel gemäß Fig. 6 unterscheidet sich von dem ersten Ausführungsbeispiel nur dadurch, dass das Verbindungsteil 29' blockartig ausgebildet ist, innen also nach wie vor einen gekrümmten Überström-Kanal 48 aufweist, in seiner Außenform aber nicht rohrförmig ist.

Alternativ zu dem geschilderten Bewegungs-Antrieb 40 kann bei der Bewegungs-Einrichtung 38' gemäß Fig. 7 auch ein als Spindel-Antrieb ausgebildeter Bewegungs-Antrieb 40' eingesetzt werden, der eine am Verbindungsteil 29' angreifende Spindel 50 aufweist, die in einer in der Halte-Einrichtung 39' drehantreibbar angeordneten Spindel-Mutter 51 geführt ist. Die Spindel-Mutter 51 wird von einem Spindel-Antriebs-Motor 52 angetrieben.

Die Bewegungs-Einrichtung 38 beziehungsweise 38' muss nicht notwendigerweise in vertikaler Abhebe-Richtung 45 wirken; sie kann auch horizontal in Richtung der Achsen 21a, 22a des zweiten Extruders 2 oder räumlich schräg zur Richtung der Achsen 12a, 13a des ersten Extruders 1 wirken. Bevorzugt ist es aber, die Abhebe-Richtung in einer vertikalen Ebene vorzusehen, die quer zur Richtung der Achsen 12a, 13a des ersten Extruders verläuft.

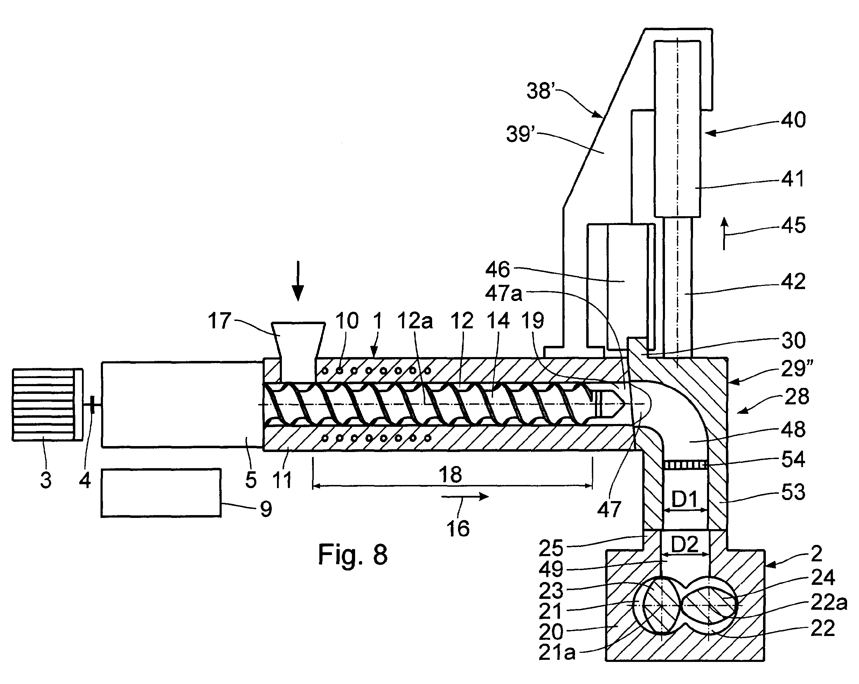

Das abgewandelte vierte Ausführungsbeispiel nach Fig. 8 unterscheidet sich von den zuvor geschilderten Ausführungsbeispielen dadurch, dass das wiederum blockartig ausgebildete Verbindungsteil 29" nach unten zum zweiten Extruder 2 hin um einen Funktions-Abschnitt 53 verlängert ist, in dem Einbauten 54 wie eine Seiherplatte, ein Sieb, ein Filter, ein Statikmischer oder dergleichen eingebaut sind beziehungsweise eingebaut werden können. Da auch diese Funktionseinbauten zugänglich sein müssen, werden in diesem vierten Ausführungsbeispiel mit nur einer BewegungsVorrichtung zwei Funktionen, nämlich Schneckenziehen und Austausch und/oder Wartung der Einbauten 54 vorteilhaft kombiniert.

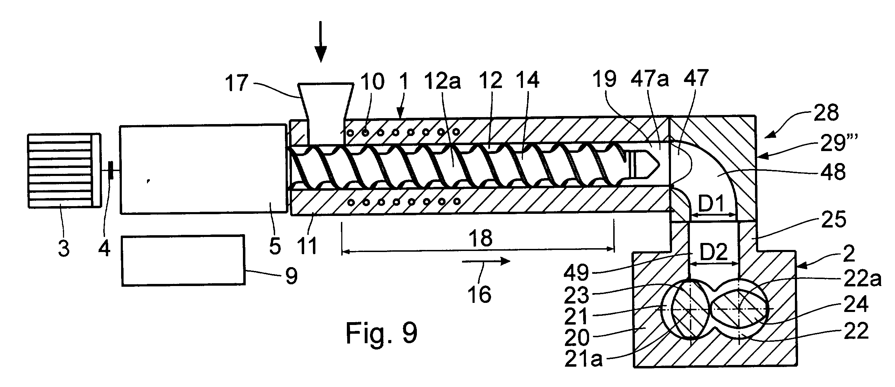

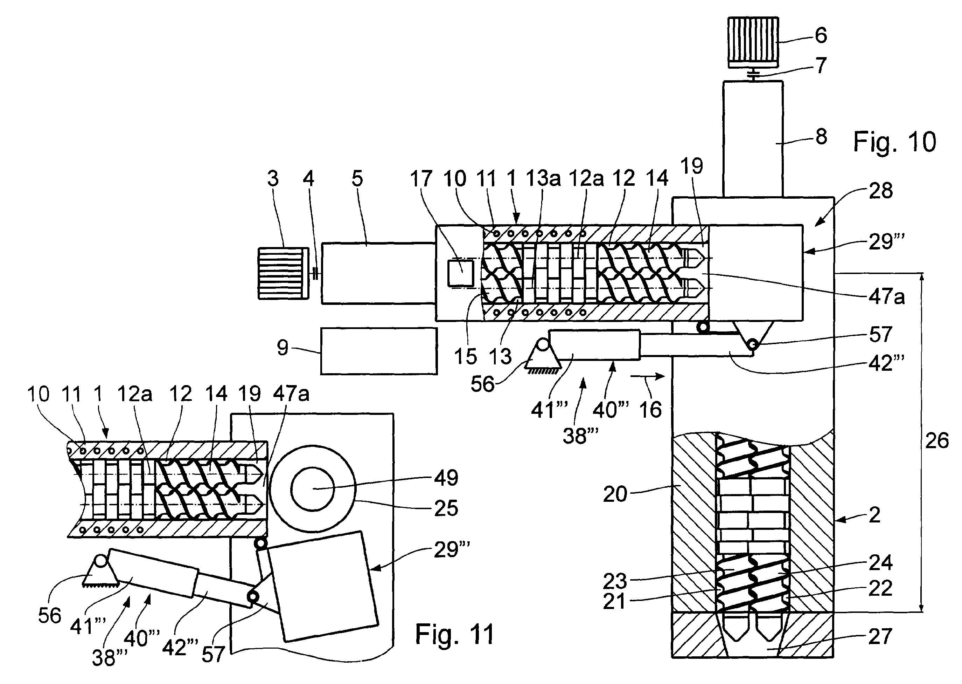

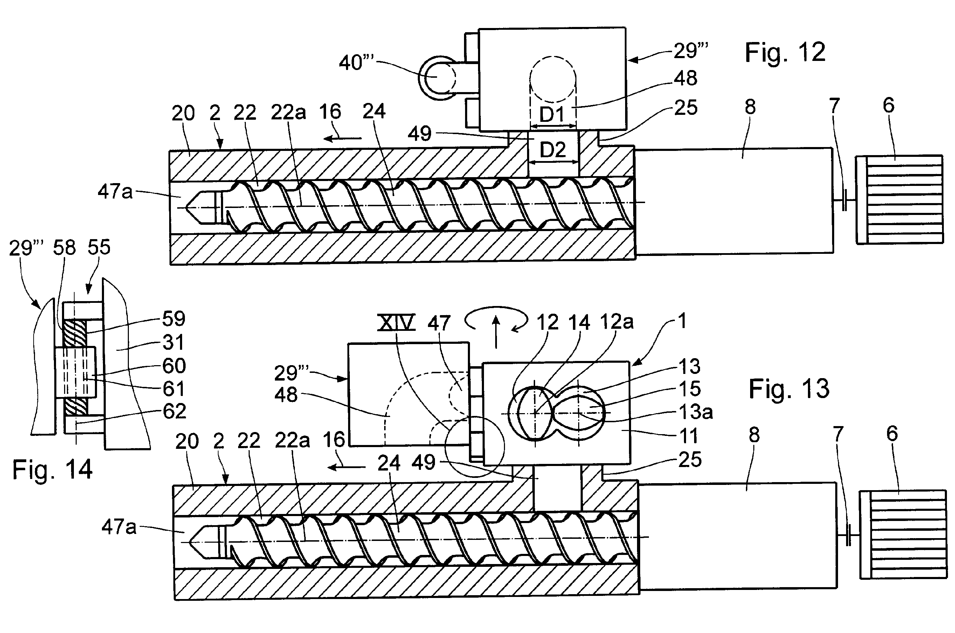

Das fünfte Ausführungsbeispiel nach den Fig. 9 bis 14 unterscheidet sich von den zuvor geschilderten wiederum durch die Ausgestaltung des Verbindungsteils 29'''. Dieses ist wiederum blockartig ausgebildet wie das Verbindungsteil 29'. Das Verbindungsteil 29''' ist am Gehäuse 11 des ersten Extruders 1 mittels einer Schwenk-Verbindung 55 angebracht, so dass es aus der Fig. 12 dargestellten geschlossenen Verbindungs-Stellung in eine in Fig. 13 dargestellte Öffnungs-Position verschwenkt werden kann, wodurch wiederum die ersten Gehäuse-Bohrungen 12, 13 geöffnet werden, so dass die ersten Schnecken-Wellen 14, 15 frei und ungehindert in Richtung der Achsen 12a, 13 a gezogen werden können.

Eine Bewegungs-Einrichtung 38''' weist einen Bewegungs-Antrieb 40''' auf, der wiederum als Druckmittel beaufschlagbarer Kolben-Zylinder-Antrieb ausgebildet sein kann, wobei der Zylinder 41''' mittels eines Schwenk-Lagers 56 ortsfest festgelegt ist, während seine Kolbenstange 42''' mittels eines Schwenk-Gelenks 57 mit dem Verbindungsteil 29''' verbunden ist. Damit bei der Schwenkbewegung das Verbindungsteil 29''' nicht nur vom Gehäuse 11 des ersten Extruders abgehoben wird, sondern auch vom Zufuhr-Stützen 25, ist die Schwenk-Verbindung 55 als Schwenk-Hebel-Verbindung ausgebildet. Sie weist hierzu einen Lager-Zapfen 58 mit einem steil verlaufenden mehrgängigen Gewinde 59 auf. Die Lager-Hülse 60 weist ein entsprechendes Innen-Gewinde 61 auf, so dass das Verbindungsteil 29''' bereits bei Beginn der Öffnungsbewegung in Richtung der Schwenkachse 62 der Schwenk-Verbindung 55 verschoben, d. h. im vorliegenden Fall angehoben wird, so dass das Verbindungsteil 29''' vom Zuführ-Stutzen 25 abgehoben wird. Das Verbindungsteil 29'''' wird in der geschlossenen Verbindungs-Stellung gemäß Fig. 9, 10 und 12 mit dem Gehäuse 11 des ersten Extruders 1 oder dem Zuführ-Stutzen 25 des zweiten Extruders 2 verschraubt. Ein Verschrauben kann in besonderen Fällen entfallen, wenn beispielsweise nur niedriger Druck herrscht, oder die zu behandelnden Stoffe nieder viskos sind, wenn keine Einbauten vorhanden sind. In diesem Fall kann das Verbindungsteil 29''' in der geschlossenen Verbindungs-Stellung durch den Bewegungs-Antrieb 40''' gehalten werden.

**Patentansprüche**

1. Anlage zum Aufbereiten von Stoffen,

   - mit einer ersten Schneckenmaschine (1), die mindestens eine Gehäuse-Bohrung (12, 13) und eine hierin angeordnete Schnecken-Welle (14, 15) aufweist,
   - mit einer der ersten Schneckenmaschine (1) nachgeordneten zweiten Schneckenmaschine (2) und

- mit einem die erste Schneckenmaschine (1) mit der zweiten Schneckenmaschine (2) in einer Verbindungs-Stellung verbindendes Verbindungsteil (29, 29', 29", 29'''), das einen Überström-Kanal (48) aufweist,

   **dadurch gekennzeichnet,**
   **dass** das Verbindungsteil (29, 29', 29", 29''') aus der Verbindungs-Stellung geführt in eine die mindestens eine Gehäuse-Bohrung (12, 13) freigebende Öffnungs-Stellung bewegbar ist und
   **dass** eine an dem Verbindungsteil (29, 29', 29", 29''') angreifende Bewegungs-Einrichtung (38, 38', 38''') zur Durchführung der geführten Bewegung vorgesehen ist.

2. Anlage nach Anspruch 1, **dadurch gekennzeichnet,**
   **dass** die Bewegungs-Einrichtung (38, 38', 38''') eine Halte-Einrichtung (39, 39') und einen Bewegungs-Antrieb (40, 40', 40''') aufweist.

3. Anlage nach Anspruch 2, **dadurch gekennzeichnet,**
   **dass** die Halte-Einrichtung (39, 39') an einer der Schneckenmaschinen (1) angebracht ist.

4. Anlage nach einem der Ansprüche 1 bis 3, **dadurch gekennzeichnet, dass** das Verbindungsteil (29, 29', 29") gegenüber der ersten Schneckenmaschine (1) geradlinig verschiebbar ist.

5. Anlage nach einem der Ansprüche 1 bis 4, **dadurch gekennzeichnet, dass** das Verbindungsteil (29) gegenüber der ersten Schneckenmaschine (1) mittels Führungs-Schienen (46) verschiebbar geführt ist.

6. Anlage nach einem der Ansprüche 1 bis 5, **dadurch gekennzeichnet, dass** das Verbindungsteil (29, 29', 29 ") quer zur Längsrichtung der ersten Schneckenmaschine (1) verschiebbar ist.

7. Anlage nach einem der Ansprüche 1 bis 3, **dadurch gekennzeichnet, dass** das Verbindungsteil (29''') aus der Verbindungs-Stellung in eine Öffnungs-Stellung schwenkbar ist.

8. Anlage nach Anspruch 7, **dadurch gekennzeichnet,**
   **dass** das Verbindungsteil (29''') mittels einer Schwenk-Verbindung (55) an einer der Schneckenmaschinen (1) angelenkt ist.

9. Anlage nach Anspruch 8, **dadurch gekennzeichnet,**
   **dass** die Schwenk-Verbindung (55) als Schwenk-Hebe-Verbindung ausgebildet ist.

10. Anlage nach Anspruch 9, **dadurch gekennzeichnet,**
    **dass** die Schwenk-Verbindung (55) einen Lager-Zapfen (58) mit einem steilen Gewinde (59) und eine hierauf angeordnete Lager-Hülse (60) mit einem Innen-Gewinde (61) aufweist.

11. Anlage nach einem der Ansprüche 1 bis 10, **dadurch gekennzeichnet, dass** das Verbindungsteil (29") einen zusätzlichen Funktions-Abschnitt (53) mit Einbauten (54) aufweist.

12. Anlage nach einem der Ansprüche 1 bis 11, **dadurch gekennzeichnet, dass** in nur einer Anlage-Fläche (35) zwischen dem Verbindungsteil (29, 29', 29", 29''') und einer der Schneckenmaschinen (2) Dichtungen (37) angeordnet sind.

13. Anlage nach einem der Ansprüche 1 bis 12, **dadurch gekennzeichnet, dass** der im Verbindungsteil (29, 29', 29", 29''') ausgebildete Überström-Kanal als zweiter Überström-Kanal (48) mit einem Durchmesser $D_1$ mit der ersten Schneckenmaschine (1) mittels eines ersten Überström-Kanals (47) und mit der zweiten Schneckenmaschine (2) mittels eines dritten Überström-Kanals (49) mit einem Durchmesser $D_2$ verbunden ist und
    **dass** für das Verhältnis der Durchmesser $D_1$ und $D_2$ zueinander gilt:

    $$D_1 \leq D_2.$$

14. Anlage nach einem der Ansprüche 1 bis 12, **dadurch gekennzeichnet, dass** die erste Schnek-ken-Maschine (1) zwei einander durchdringende Gehäuse-Bohrungen (12, 13) mit 8-förmigem Querschnitt aufweist, dass der zweite Überström-Kanal (48) mit kreisförmigem Querschnitt und einem Durchmesser D1 mit der ersten Schnecken-Maschine (1) mittels eines ersten Überström-Kanals (47) verbunden ist und
    **dass** der erste Überström-Kanal (47) einen Übergang von einem 8-förmigen Querschnitt zu einem kreisförmigen Querschnitt aufweist.

15. Anlage nach Anspruch 14, **dadurch gekennzeichnet,**
    **dass** der erste Überström-Kanal (47) im Verbindungsteil (29, 29', 29", 29''') ausgebildet ist.

16. Anlage nach einem der Ansprüche 1 bis 15, **dadurch gekennzeichnet, dass** die Bewegungs-Einrichtung (38, 28', 38''') mit der Anlage verbunden ist.

Fig. 1

Fig. 3

Fig. 4

Fig. 2

Fig. 5

Fig. 7

Fig. 6

Fig. 8

EP 1 481 785 A1

Fig. 9

EP 1 481 785 A1

Fig. 10

Fig. 11

Fig. 12

Fig. 13

Fig. 14

EP 1 481 785 A1

**Europäisches Patentamt**

**EUROPÄISCHER RECHERCHENBERICHT**

Nummer der Anmeldung

EP 03 01 1995

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | GB 1 364 725 A (USM CORP) 29. August 1974 (1974-08-29) * Seite 4, Zeile 29 – Zeile 46 * * Anspruch 1; Abbildung 2 * | 1,4 | B29C47/50 B29C47/08 |
| Y | | 2,3,7,8 | |
| A | | 5,6,9-16 | |
| Y | GB 1 183 445 A (UNIROYAL ENGLEBERT DEUTSCHLAND A.G.) 4. März 1970 (1970-03-04) * Abbildungen * | 2,3,7,8 | |
| A | | 9-12 | |
| A | EP 1 008 434 A (DIEFFENBACHER GMBH MASCHF) 14. Juni 2000 (2000-06-14) * Spalte 3, Zeile 51 – Zeile 54 * * Spalte 4, Zeile 12 – Zeile 26 * * Spalte 4, Zeile 55 – Spalte 5, Zeile 4 * * Abbildungen 1-3 * | 1,7-9 | |
| A | PATENT ABSTRACTS OF JAPAN vol. 1995, no. 11, 26. Dezember 1995 (1995-12-26) & JP 07 205147 A (HITACHI ZOSEN SANGYO KK), 8. August 1995 (1995-08-08) * Zusammenfassung * | 1,13-15 | RECHERCHIERTE SACHGEBIETE (Int.Cl.7) B29C B30B B29B |
| A | US 5 865 472 A (FREYNHOFER ALBRECHT) 2. Februar 1999 (1999-02-02) * Zusammenfassung; Abbildung 2 * | 1-4 | |

Der vorliegende Recherchenbericht wurde für alle Patentansprüche erstellt

| Recherchenort | Abschlußdatum der Recherche | Prüfer |
|---|---|---|
| DEN HAAG | 13. November 2003 | Jensen, K |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03 82 (P04C03)

**EP 1 481 785 A1**

**ANHANG ZUM EUROPÄISCHEN RECHERCHENBERICHT**
**ÜBER DIE EUROPÄISCHE PATENTANMELDUNG NR.**

EP 03 01 1995

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-11-2003

| Im Recherchenbericht angeführtes Patentdokument | | | Datum der Veröffentlichung | Mitglied(er) der Patentfamilie | | Datum der Veröffentlichung |
|---|---|---|---|---|---|---|
| GB | 1364725 | A | 29-08-1974 | AU | 466878 B2 | 24-05-1973 |
| | | | | AU | 3583671 A | 24-05-1973 |
| | | | | CA | 965080 A1 | 25-03-1975 |
| | | | | FR | 2114932 A5 | 30-06-1972 |
| | | | | IT | 940719 B | 20-02-1973 |
| | | | | JP | 56003091 B | 23-01-1981 |
| | | | | SE | 377441 B | 07-07-1975 |
| | | | | US | 4310251 A | 12-01-1982 |
| GB | 1183445 | A | 04-03-1970 | BE | 714190 A | 25-10-1968 |
| | | | | DE | 1629747 B1 | 20-01-1972 |
| | | | | FR | 1561008 A | 21-03-1969 |
| | | | | LU | 55994 A1 | 14-11-1969 |
| | | | | NL | 6806038 A | 04-11-1968 |
| EP | 1008434 | A | 14-06-2000 | DE | 19857288 A1 | 15-06-2000 |
| | | | | EP | 1008434 A1 | 14-06-2000 |
| JP | 07205147 | A | 08-08-1995 | KEINE | | |
| US | 5865472 | A | 02-02-1999 | DE | 19652952 A1 | 25-06-1998 |
| | | | | AT | 215437 T | 15-04-2002 |
| | | | | AU | 721866 B2 | 13-07-2000 |
| | | | | AU | 4844197 A | 25-06-1998 |
| | | | | DE | 59706849 D1 | 08-05-2002 |
| | | | | EP | 0849065 A1 | 24-06-1998 |
| | | | | ES | 2175252 T3 | 16-11-2002 |
| | | | | JP | 11129318 A | 18-05-1999 |
| | | | | ZA | 9711354 A | 18-06-1999 |

EPO FORM P0461

Für nähere Einzelheiten zu diesem Anhang : siehe Amtsblatt des Europäischen Patentamts, Nr.12/82

15